# EUROPÄISCHE PATENTANMELDUNG

(11) **EP 4 755 535 A1**
(43) Veröffentlichungstag der Anmeldung: **10.06.2026**
(21) Anmeldenummer: 25219643.1
(22) Anmeldetag: 01.12.2025
(51) Int. Cl.: B08B 15/04, B23Q 11/00, A47L 5/38, A47L 7/00, A47L 9/24, A47L 9/28

(54) **ABSAUGEINRICHTUNG, BEARBEITUNGSMASCHINE UND VERFAHREN**

(30) Priorität: 06.12.2024 DE 102024136490
(71) Anmelder: HOMAG GmbH, 72296 Schopfloch (DE)
(72) Erfinder: Rieger, Harald, 72178 Waldachtal (DE)
(74) Vertreter: Hoffmann Eitle

(57) **Zusammenfassung**

Die Erfindung betrifft eine Absaugeinrichtung zum Absaugen von Bearbeitungsrückständen einer Bearbeitungsmaschine, umfassend: eine Fluidleitung, die eingerichtet ist, eine Fluidverbindung zwischen einer Absaugöffnung und einer Energiequelle zum Erzeugen einer Absaugströmung bereitstellen, und ein Einstellelement, wobei das Einstellelement eingerichtet ist, die Fluidleitung zu öffnen und/oder zu schließen.

## Beschreibung

### Technisches Gebiet

Die vorliegende Erfindung betrifft eine Absaugeinrichtung, eine Bearbeitungsmaschine mit einer Absaugeinrichtung, sowie ein Verfahren.

Durch eine Absaugung können Bearbeitungsrückstände, wie Späne und/oder Staub, die bei der Bearbeitung eines Werkstücks anfallen, abgeführt werden. Die genannten Werkstücke können insbesondere plattenförmig ausgebildet sein, wobei es sich rein beispielhaft um Massivholz- oder Spanplatten, MDF-Platten, Verbundmaterialwerkstücke, oder Ähnliches handelt.

### Stand der Technik

Im Bereich der Möbel- und Bauelementeindustrie werden Werkstücke, die beispielsweise aus Holz, Holzwerkstoffen, Kunststoff oder einer Kombination dieser bestehen, auf vielfältige Weise spanend bearbeitet. Dabei fallen als Bearbeitungsrückstände Späne, Staub oder ähnliches an, die mittels einer Absaugeinrichtung abgeführt werden. Bei der Weiterentwicklung solcher Bearbeitungsmaschinen herrscht das Bestreben, eine möglichst effektive Absaugung bereitzustellen und damit den Energieverbrauch der Absaugeinrichtungen zu senken. Gleichzeitig sollen die Bearbeitungsrückstände bestmöglich entfernt werden, um eine hohe Fertigungsqualität zu gewährleisten.

Bei den genannten Bearbeitungsmaschinen werden im Allgemeinen Klappen eingesetzt, die zumeist die Absaugluft von einzelnen Aggregaten komplett zu- oder abschalten. Zwischenstellungen sind mittels Klappen problematisch, da diese zu einer Verstopfung im Absaugkanal oder zur Abrasion der Klappe führen können. Außerdem wird durch den Einsatz von Klappen ein Druckverlust in Summe erhöht, wodurch auch der Energieverbrauch steigt.

In diesem Zusammenhang ist das Dokument DE 10 2022 124 769 A1 bekannt, in dem ein Reinigungssystem für eine Bearbeitungsmaschine beschrieben wird. Das Reinigungssystem umfasst eine Reinigungsvorrichtung, die eine Hauptfluidleitung sowie mehrere mit der Hauptfluidleitung in Verbindung stehende Nebenfluidleitungen umfasst, wobei eine oder mehrere der Nebenfluidleitungen mit einer Einstellvorrichtung zum Ändern einer Durchflussmenge ausgestattet ist/sind, und eine Steuereinrichtung, die eingerichtet ist, die Einstellvorrichtungen zu steuern.

Ein weiterer Aspekt ist die Bewertung einer Absaugströmung. Aus der DE 10 2020 100 928 A1 ist eine Fluidströmungsmesseinrichtung zur Bewertung einer Absaugströmung bekannt, die zumindest ein durchströmtes Gehäuse zum Führen einer gasförmigen Fluidströmung umfasst, das dazu eingerichtet ist, in einen strömungsführenden Strang einer Bearbeitungsmaschine implementiert zu werden. Ferner umfasst die Fluidströmungsmesseinrichtung zumindest eine Messstelle, die an dem durchströmten Gehäuse vorgesehen ist, und eine bevorzugt außerhalb des durchströmten Gehäuses angeordnete Sensoreinheit zur Erfassung der gasförmigen Fluidströmung mittels der zumindest einen Messstelle, wobei die Sensoreinheit ein Differenzdrucksensor, ein Flügelradsensor, ein Vortexsensor, ein thermischer Sensor, ein Ultraschallsensor, zwei Drucksensoren oder dergleichen ist.

### Darstellung der Erfindung

Die Erfindung zielt darauf ab, eine Absaugeinrichtung mit hoher Energieeffizienz bereitzustellen.

Eine derartige Absaugeinrichtung wird in Anspruch 1 beschrieben. Weitere bevorzugte Ausführungsformen sind in den abhängigen Ansprüchen sowie nachfolgend aufgeführt.

Die erfindungsgemäße Absaugeinrichtung, die zum Absaugen von Bearbeitungsrückständen einer Bearbeitungsmaschine eingerichtet ist, umfasst eine Fluidleitung, die eingerichtet ist, eine Fluidverbindung zwischen einer Absaugöffnung und einer Energiequelle zum Erzeugen einer Absaugströmung bereitstellen, und ein Einstellelement, wobei das Einstellelement eingerichtet ist, die Fluidleitung zu öffnen und/oder zu schließen.

Mit der Absaugeinrichtung gemäß der Erfindung ist es möglich, den Absaug-Volumenstrom bedarfsgerecht einzustellen und diese Einstellung äußerst effizient vorzunehmen. Insbesondere für einen autonomen Maschinenbetrieb ist die erfindungsgemäße Absaugeinrichtung demnach vorteilhaft. Durch eine Betätigung des Einstellelements kann ein Volumenstrom in der Fluidleitung flexibel geändert werden.

Durch die Nutzung der durch die Öffnung bereitgestellten Luft zur temporären Unterstützung der Raumabsaugung oder anderen Absaugstellen wird die angesaugte Luft für einen weiteren Zweck verwendet und damit nachhaltig eingesetzt. Der Druckverlust der Absaugeinrichtung wird dadurch bei gewünscht gedrosselter Absaugleistung gesenkt, was vorteilhaft bezüglich der notwendigen Absaugenergie ist.

Die erzeugte Druckänderung hat eine Rückwirkung auf die Absaugeinrichtung. Dies hat bei allen Absauganlagen - aber im Besonderen bei schon installierten zentralen Absauganlagen - Vorzüge, so dass diese durch den (zeitweise) reduzierten Druckverlust infolge dem in der Absaugeinrichtung bereitgestellten Einstellelements die Absaugleistung entsprechend senkt. Damit hat dieser Ansatz auch großes Potential als Nachrüstlösung.

Das Einstellelement kann an der Fluidleitung angebracht sein. Insbesondere ist das Einstellelement außerhalb der Fluidleitung angebracht.

Da das Einstellelement außerhalb der Fluidleitung angeordnet ist, wird die Gefahr eines Verstopfens der Fluidleitung dadurch reduziert, dass Einbauteile innerhalb der Fluidleitung vermieden werden und durch die Zusatzluft die Durchströmung erhöht wird.

Das Einstellelement kann um den Umfang der Fluidleitung angebracht sein, sodass das Einstellelement die Fluidleitung zumindest teilweise umgreift.

Gemäß einer bevorzugten Ausführungsform ist das Einstellelement stufenlos einstellbar. Dies ermöglicht eine präzise Justage. Gemäß einer anderen Ausführungsform kann es auch vorgesehen sein, das Einstellelement schrittweise zu verstellen. Eine schrittweise oder gestufte Einstellung lässt sich vergleichsweise kostengünstig umsetzen.

Es ist bevorzugt, dass das Einstellelement eine spaltförmige Einströmgeometrie, insbesondere eine kegelförmige oder trichterförmige Öffnung, ausbildet. Die spaltförmige Einströmgeometrie, insbesondere die kegelförmige Öffnung, kann teilweise oder vollständig um den Umfang der Fluidleitung ausgebildet werden. Mit einer entlang des Umfangs teilweise ausgebildeten Öffnung wird gewissermaßen ein Öffnungsfenster bereitgestellt.

Durch das Einstellelement kann eine Öffnung ausgebildet werden, die relativ zur Strömungsrichtung des Fluids in der Fluidleitung geneigt ist. Somit kann ein Fluid, welches in die Fluidleitung eingesaugt wird, schräg zur Richtung der Strömung in der Fluidleitung geführt und mit dem Fluid in der Fluidleitung zusammengeführt werden.

Die Absaugeinrichtung kann eine Messeinrichtung zum Ermitteln eines Volumenstroms aufweisen. Die Messeinrichtung kann dabei benachbart zum Einstellelement angeordnet sein. Um den Volumenstrom in der Fluidleitung zu ermitteln, umfasst die Messeinrichtung einen oder mehrere Drucksensoren, die mit einer oder mehreren Öffnungen zur Fluidleitung in Verbindung stehen. Insbesondere ist im genannten Einstellelement eine Öffnung zur Fluidleitung vorgesehen. Ferner können in weiteren Komponenten der Absaugeinrichtung, insbesondere dem Gegenstück und/oder dem Flansch, eine oder mehrere Öffnungen vorgesehen sein, die mit dem Drucksensor oder den Drucksensoren der Messeinrichtung in Verbindung steht/stehen.

Ferner kann eine Kombination mit einer Messung des Strömungsvolumenstrom oder einer anderen physikalischen Größe die Funktionsdichte in einem Bauteil erhöhen.

Gemäß einer Ausführungsform ist das Einstellelement benachbart zu einem Gegenstück angeordnet, sodass das Einstellelement zum Öffnen und/oder Schließen der Fluidleitung mit dem Gegenstück interagiert. Das Gegenstück kann dabei unbeweglich an einem Abschnitt der Fluidleitung verbleiben. Wird das Einstellelement bewegt, bildet sich eine Öffnung zwischen dem Einstellelement und dem Gegenstück und damit eine Öffnung zur Fluidleitung.

Ferner kann die Absaugeinrichtung eine Steuereinrichtung aufweisen, die eingerichtet ist, das Einstellelement auf Grundlage des Erfassungsergebnisses der Messeinrichtung zu regeln. Somit kann die Absaugeinrichtung je nach Anforderung eingestellt werden, sodass ein Volumenstrom in der Fluidleitung flexibel geändert werden kann.

Die Fluidleitung kann als Rohr oder (insbesondere flexibler) Schlauch ausgebildet sein. Insbesondere ist das Rohr oder der Schlauch mehrteilig ausgebildet.

Ferner betrifft die Erfindung eine Bearbeitungsmaschine zum Bearbeiten eines Werkstücks. Insbesondere handelt es sich um eine Holzbearbeitungsmaschine. Die Bearbeitungsmaschine kann ausgebildet sein, ein sich bewegendes oder ein zumindest zeitweise stationär angeordnetes Werkstück zu bearbeiten.

Die Bearbeitungsmaschine umfasst eine Absaugeinrichtung zum Absaugen von Bearbeitungsrückständen, wobei die Absaugeinrichtung eine Fluidleitung aufweist, die eingerichtet ist, eine Fluidverbindung zwischen einer Absaugöffnung und einer Energiequelle zum Erzeugen einer Absaugströmung bereitzustellen. Die Absaugeinrichtung weist ferner ein Einstellelement auf, wobei das Einstellelement eingerichtet ist, die Fluidleitung abschnittsweise zu öffnen und/oder zu schließen.

Das Einstellelement ist bevorzugt im Bereich der Bearbeitungsmaschine, insbesondere innerhalb der Bearbeitungsmaschine, angeordnet.

Das Einstellelement ist derart angeordnet, dass durch eine mit dem Einstellelement bereitgestellte Öffnung ein Umgebungsfluid ansaugbar ist. Das Umgebungsfluid kann im Innenraum der Bearbeitungsmaschine entnommen werden. Dadurch wird eine Raumabsaugung unterstützt. Die zusätzliche Ansaugstelle kann z.B. auch an temporären "Staubbunkerräumen" positioniert werden, so dass deren temporäre Entleerung erfolgen kann. Damit wird das Umgebungsfluid nachhaltig genutzt.

Die Absaugeinrichtung kann mehrere Einstellelemente umfassen. Die Einstellelemente können aufeinander abgestimmt geöffnet und/oder geschlossen werden, insbesondere wenn das Zuführen von Umgebungsfluid an einem der Einstellelemente für die konkrete Anforderung nicht genügt, oder wenn bestimmt wird, dass mehrere Einstellelemente in bestimmten Zeitintervallen zum Entferner von Bearbeitungsresten aus dem Innenraum der Bearbeitungsmaschine genutzt werden sollen.

Ferner kann die Bearbeitungsmaschine mehrere Absaugeinrichtungen umfassen. Diese Absaugeinrichtungen können mit unterschiedlichen Bearbeitungsaggregaten der Bearbeitungsmaschine in Verbindung stehen.

Die Bearbeitungsmaschine kann eine Fördereinrichtung zum Bewegen eines Werkstücks umfassen, sodass das Werkstück an der Absaugöffnung der Fluidleitung vorbeigeführt wird. Eine derartige Maschine wird auch als sogenannte Durchlaufmaschine bezeichnet. Gemäß einem weiteren Aspekt kann es sich bei der Bearbeitungsmaschine jedoch auch um eine sogenannte Stationärmaschine handeln, bei der ein zumindest zeitweise stationär angeordnetes Werkstück bearbeitet wird.

Gemäß einem weiteren Aspekt wird ein Verfahren zum Betrieb einer Absaugeinrichtung bereitgestellt. Die Absaugeinrichtung kann gemäß einem der zuvor genannten Aspekte ausgebildet sein. Gemäß dem genannten Verfahren wird ein Einstellelement betätigt, wobei das Einstellelement die Fluidleitung öffnet und/oder schließt.

Das Verfahren kann ferner dazu ausgebildet sein, die Bearbeitungsmaschine gemäß einem der genannten Aspekte unter Einsatz der Absaugeinrichtung zu betreiben.

Mit dem Verfahren zum Betrieb der Absaugeinrichtung zum Absaugen von Bearbeitungsrückständen einer Bearbeitungsmaschine ist es möglich, den Absaug-Volumenstrom bedarfsgerecht einzustellen und diese Einstellung äußerst effizient vorzunehmen. Insbesondere für einen autonomen Maschinenbetrieb ist die erfindungsgemäße Absaugeinrichtung demnach vorteilhaft. Durch eine Betätigung des Einstellelements kann ein Volumenstrom in der Fluidleitung flexibel geändert werden.

### Kurze Beschreibung der Zeichnung

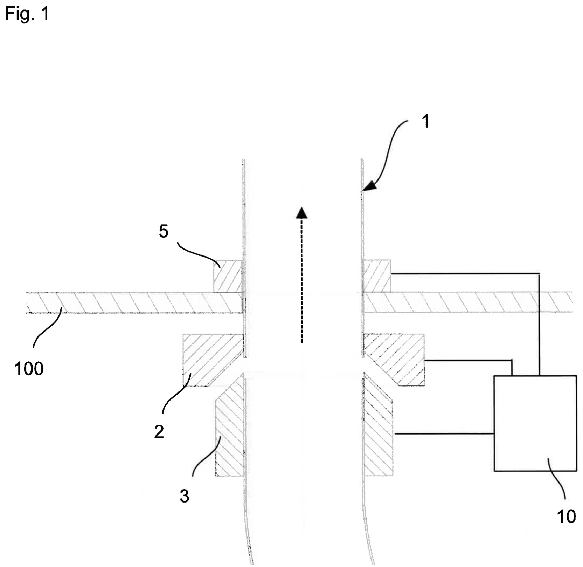

- Fig. 1: ist eine schematische Ansicht einer Absaugeinrichtung gemäß einer ersten Ausführungsform.

### Beschreibung von Ausführungsformen

Fig. 1 ist eine schematische Ansicht, die Komponenten einer Absaugeinrichtung zum Absaugen von Bearbeitungsrückständen einer Bearbeitungsmaschine zeigt. Die Absaugeinrichtung ist an einer Einhausung 100 der Bearbeitungsmaschine angebracht.

Bei der Bearbeitung von Werkstücken aus beispielsweise Holz oder Holzwerkstoffen entstehen Bearbeitungsrückstände, wie Späne und/oder (Holz-)Staub. Zur Entfernung solcher Bearbeitungsrückstände werden in einer Bearbeitungsmaschine eine oder mehrere Absaugeinrichtungen eingesetzt. Eine derartige Absaugeinrichtung ist derart auszulegen, dass eine hohe Absaugleistung mit möglichst geringem Energieeinsatz erreicht wird.

Die Absaugeinrichtung gemäß der Ausführungsform umfasst eine Fluidleitung 1, die mehrteilig ausgebildet ist und eine Fluidverbindung zwischen einer Absaugöffnung, insbesondere einer Absaughaube im Bereich eines Bohr- oder Fräsaggregats, und einer Energiequelle zum Erzeugen einer Absaugströmung bereitstellt. Bei der Energiequelle kann es sich um eine zentrale Energiequelle handeln, die von mehreren Bearbeitungsmaschinen genutzt wird, oder die Energiequelle ist einer bestimmten Bearbeitungsmaschine zugeordnet oder in dieser aufgenommen. Die Fluidleitung 1 ist mittels eines Flansches 5 an der Einhausung 100 der Bearbeitungsmaschine angebracht.

Die Fluidleitung 1 ist insbesondere als flexibler, mehrteiliger Schlauch ausgebildet, der außerhalb und innerhalb der Bearbeitungsmaschine geführt wird. Der in Fig. 1 dargestellte Abschnitt der Fluidleitung 1 befindet sich teilweise innerhalb und teilweise außerhalb der Bearbeitungsmaschine.

Ein stufenlos einstellbares Einstellelement 2 sowie ein Gegenstück 3 sind um einen Umfang der Fluidleitung 1 angebracht. Das Einstellelement 2 ist eingerichtet, durch eine translatorische Bewegung die Fluidleitung 1 in einem Bereich zwischen dem Einstellelement 2 und dem Gegenstück 3 zu öffnen. Da das Einstellelement 2 innerhalb der Bearbeitungsmaschine angeordnet ist, kann bei geöffneter Fluidleitung 1 eine temporäre Unterstützung der Raumabsaugung an dieser Stelle bereitgestellt werden, so dass die Absaugung von Verunreinigungen auch an dieser Stelle der Bearbeitungsmaschine stattfindet. Die zusätzliche Ansaugstelle wird im Ausführungsbeispiel zum Entfernen von temporären Ansammlungen von Bearbeitungsresten genutzt. Damit wird die Absaugluft nachhaltig genutzt.

Ferner ist an der Fluidleitung 1 benachbart zum Einstellelement 2 eine Messeinrichtung 10 zum Erfassen eines Drucks und damit zum Ermitteln eines Volumenstroms angebracht. Insbesondere umfasst die Messeinrichtung 10 einen Drucksensor zur Ermittlung eines Drucks in der Fluidleitung 1. Gemäß einer weiteren Ausführungsform kann die Messeinrichtung 10 eine optische Messvorrichtung aufweisen, mit der ein Partikelstrom in der Fluidleitung erfasst werden kann.

Im vorliegenden Ausführungsbeispiel ist die Messeinrichtung 10 mit dem Einstellelement 2, dem Gegenstück 3 sowie dem Flansch 5 in Verbindung, um an Öffnungen, die im Einstellelement 2, dem Gegenstück 3 sowie dem Flansch 5 vorgesehen sind, einen Druck zu erfassen und auf dieser Grundlage den Volumenstrom in der Fluidleitung 1 zu ermitteln.

Die Absaugeinrichtung umfasst eine Steuereinrichtung, die eingerichtet ist, das Einstellelement 2 auf Grundlage des Erfassungsergebnisses der Messeinrichtung 10 zu regeln. Die Steuereinrichtung kann dabei in der Bearbeitungsmaschine vorgesehen sein, beispielsweise in Maschinensteuerung implementiert sein.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Absaugeinrichtung zum Absaugen von Bearbeitungsrückständen einer Bearbeitungsmaschine, umfassend:
eine Fluidleitung (1), die eingerichtet ist, eine Fluidverbindung zwischen einer Absaugöffnung und einer Energiequelle zum Erzeugen einer Absaugströmung bereitzustellen,
ein Einstellelement (2), wobei das Einstellelement (2) eingerichtet ist, die Fluidleitung (1) zu öffnen und/oder zu schließen.

2. Absaugeinrichtung gemäß Anspruch 1, wobei das Einstellelement (2) außerhalb der Fluidleitung (1) angebracht ist.

3. Absaugeinrichtung gemäß einem der vorangegangenen Ansprüche, wobei das Einstellelement (2) um den Umfang der Fluidleitung (1) angebracht ist.

4. Absaugeinrichtung gemäß einem der vorangegangenen Ansprüche, wobei das Einstellelement (2) stufenlos einstellbar ist.

5. Absaugeinrichtung gemäß einem der vorangegangenen Ansprüche, wobei das Einstellelement (2) eine spaltförmige Einströmgeometrie, insbesondere eine kegelförmige Öffnung, ausbildet.

6. Absaugeinrichtung gemäß einem der vorangegangenen Ansprüche, ferner umfassend eine Messeinrichtung (10) zum Ermitteln eines Volumenstroms, wobei bevorzugt ist, dass die Messeinrichtung (10) benachbart zum Einstellelement (2) angeordnet ist.

7. Absaugeinrichtung gemäß einem der vorangegangenen Ansprüche, wobei das Einstellelement (2) benachbart zu einem Gegenstück (3) angeordnet ist, sodass das Einstellelement (2) zum Öffnen und/oder Schließen der Fluidleitung (1) mit dem Gegenstück (3) interagiert.

8. Absaugeinrichtung gemäß Anspruch 6 oder 7, umfassend eine Steuereinrichtung, die eingerichtet ist, das Einstellelement (2) auf Grundlage des Erfassungsergebnisses der Messeinrichtung (10) zu regeln.

9. Absaugeinrichtung gemäß einem der vorangegangenen Ansprüche, wobei die Fluidleitung (1) ein Rohr oder ein, insbesondere flexibler, Schlauch ist.

10. Bearbeitungsmaschine zum Bearbeiten eines Werkstücks, umfassend eine Absaugeinrichtung zum Absaugen von Bearbeitungsrückständen,
wobei die Absaugeinrichtung eine Fluidleitung (1) aufweist, die eingerichtet ist, eine Fluidverbindung zwischen einer Absaugöffnung und einer Energiequelle zum Erzeugen einer Absaugströmung bereitzustellen,
und die Absaugeinrichtung ferner ein Einstellelement (2) aufweist, wobei das Einstellelement (2) eingerichtet ist, die Fluidleitung (1) abschnittsweise zu öffnen und/oder zu schließen.

11. Bearbeitungsmaschine gemäß Anspruch 10, wobei das Einstellelement (2) im Bereich der Bearbeitungsmaschine, insbesondere innerhalb der Bearbeitungsmaschine, angeordnet ist.

12. Bearbeitungsmaschine gemäß Anspruch 10 oder 11, wobei das Einstellelement (2) derart angeordnet ist, dass durch eine mit dem Einstellelement (2) bereitgestellte Öffnung ein Umgebungsfluid ansaugbar ist.

13. Bearbeitungsmaschine gemäß einem der Ansprüche 10-12, wobei die Absaugeinrichtung mehrere Einstellelemente (2) umfasst, und/oder
die Bearbeitungsmaschine mehrere Absaugeinrichtungen umfasst.

14. Bearbeitungsmaschine gemäß einem der Ansprüche 10-13, umfassend eine Fördereinrichtung zum Bewegen eines Werkstücks derart, dass das Werkstück an der Absaugöffnung der Fluidleitung (1) vorbeigeführt wird.

15. Verfahren zum Betrieb einer Absaugeinrichtung zum Absaugen von Bearbeitungsrückständen einer Bearbeitungsmaschine, umfassend den Schritt des Betätigens eines Einstellelements (2), wobei das Einstellelement (2) die Fluidleitung (1) öffnet und/oder schließt.
